# EUROPÄISCHE PATENTSCHRIFT

(11) **EP 2 787 210 B1**
(45) Veröffentlichungstag und Bekanntmachung des Hinweises auf die Patenterteilung: **14.10.2015**
(21) Anmeldenummer: 14163289.3
(22) Anmeldetag: 03.04.2014
(51) Int. Cl.: F02K 3/075, F02K 1/38

(54) **Mischvorrichtung und Turbofantriebwerk mit einer derartigen Mischvorrichtung**
Mixing device and turbofan engine with such a mixing device
Dispositif de mélange et turboréacteur doté d'un tel dispositif de mélange

(30) Priorität: 04.04.2013 DE 102013205911
(43) Veröffentlichungstag der Anmeldung: 08.10.2014
(73) Patentinhaber: MTU Aero Engines AG, 80995 München (DE)
(72) Erfinder: Klingels, Hermann, 85221 Dachau (DE); Klän, Stephan, 80469 München (DE); Scherer, Christian, 85244 Röhrmoos (DE); Vogel, Uwe, 80939 München (DE)

(56) Entgegenhaltungen:
- US-A- 3 362 431
- US-A- 3 556 246
- US-A- 5 771 681

## Beschreibung

Die Erfindung betrifft eine Mischvorrichtung zum Mischen eines ersten Gasstroms mit einem zweiten Gasstrom in einem Turbofantriebwerk, mit einer Betätigungsvorrichtung und einer Wandung, die einen radial innen liegenden Kanal für den ersten Gasstrom und einen radial außen liegenden Kanal für den zweiten Gasstrom begrenzt, wobei die Betätigungsemrichtung ein Koppelelement umfasst, das mit der Wandung gekoppelt ist, wobei die Betätigungseinrichtung ausgebildet ist, mittels des Koppelelements die Wandung von einer ersten Position in eine radial außen zur ersten Position angeordnete zweiten Position zu schwenken.

Bei Turbofantriebwerken kann durch eine Vermischung von einem Mantelstrom eines Fans und einem Kernstrom einer Fluggasturbine eine Lärmminderung und eine Reduzierung des spezifischen Brennstoffverbrauchs erreicht werden. Die Vermischung erfolgt berkömmlicherweise über eine stromabwärts hinter einer Niederdruckturbine der Fluggasturbine positionierte Mischvorrichtung mit einer mäanderförmigen Kontur, mittels der abwechselnd zumindest ein Teilstrom des Mantelstroms radial nach innen und zumindest ein Teilstrom des Kernstroms radial nach außen gelenkt werden. Derartige, aufgrund ihrer mäanderartigen Kontur als Blütenmischer bezeichnete Mischvorrichtungen, sind beispielsweise in der DE 10 2010 014 909 A1 oder DE 10 2010 014 910 A1 gezeigt. Um die Mischvorrichtung an verschiedene Betriebspunkte anpassen zu können, wird dabei die Kontur der Mischvorrichtung varüert. Dabei kann mittels eines flexiblen Wandungsaufbaus, der durch eine Betätigungsvorrichtung eingeschnürt oder erweitert wird, die Ablenkrichtung des Kern- bzw. Mantelstroms verändert werden. Hierbei ist jedoch die Ablenkrichtung durch die Elastizität des Materials beschränkt.

Eine Mischvorrichtung nach dem Oberbegriff vom Anspruch 1 ist zum Beispiel aus der US 5 771 681 A und aus der US 3 362 431 A bekannt.

Es ist Aufgabe der Erfindung, eine verbesserte Mischvorrichtung für ein Turbofantriebwerk und ein Turbofantriebwerk mit solch einer Mischvorrichtung bereitzustellen.

Diese Aufgabe wird mittels einer Mischvorrichtung mit den Merkmalen des Anspruchs 1 gelöst. Vorteilhafte Ausfühnmgsformen sind in den abhängigen Ansprüchen angegeben. Erfindungsgemäß wurde erkannt, dass eine verbesserte Mischvorrichtung zum Mischen eines ersten Gasstroms mit einem zweiten Gasstrom in einem Turbofantriebwerk dadurch bereitgestellt werden kann, dass die Mischvorrichtung eine Betätigungsvorrichtung und eine Wandung umfasst, die einen radial innen liegenden Kanal für den ersten Gasstrom und einen radial außen liegenden Kanal für den zweiten Gasstrom begrenzt. Die Betätigungseinrichtung umfasst ein Koppelelement, das mit der Wandung gekoppelt ist, wobei die Betätigungseinrichtung ausgebildet ist, mittels des Koppelelements die Wandung zwischen einer ersten Position in eine radial außen zur ersten Position angeordnete zweite Position zu schwenken. Ferner umfasst die Betätigungsvorrichtung einen zwischen einer ersten Drehposition und einer zweiten Drehposition in Umfangsrichtung verdrehbaren Stellring, der mit dem Koppelelement verbunden ist. Dabei ist Koppelelement steif ausgebildet und mit dem Stellring derart gekoppelt ist, dass durch eine Verdrehung des Stellrings zwischen der ersten Drehposition und der zweite Drehposition, die Wandung durch das Koppelelement zwischen der ersten Position und der zweite Position korrespondierend zur Verdrehung des Stellrings geschwenkt wird.

Auf diese Weise können die erste Position und die zweite Position radial weit voneinander beabstandet gewählt und gleichzeitig eine kompakte und robuste Ausbildung der Betätigungsvorrichtung zum Schwenken der Wandung bereitgestellt werden. Die Kompaktheit äußert sich darin, dass ein besonders geringer radialer Bauraum hierfür benötigt wird.

Erfindungsgemäß ist ferner eine Tragestruktur vorgesehen, die in axialer Richtung angrenzend an die Wandung angeordnet ist, wobei die Tragestruktur ein Befestigungselement umfasst, wobei axial der Stellring zwischen dem Befestigungselement und der Wandung angeordnet ist und mit einem weiteren Koppelelement mit dem Befestigungselement verbunden ist. Auf diese Weise kann eine axiale Position des Stellrings auf einfache Weise festgelegt werden.

Besonders vorteilhaft ist, wenn das Koppelelement eine Koppelstange umfasst und wenigstens ein Gelenk mit einem ersten Gelenkabschnitt und einem mit dem ersten Gelenkabschnitt verbundenen zweiten Gelenkabschnitt vorgesehen ist, wobei der erste Gelenkabschnitt gegenüber dem zweiten Gelenkabschnitt um zumindest eine Achse, insbesondere um zwei Achsen schwenkbar ist, wobei der erste Gelenkabschnitt an zumindest einem Längsende der Koppelstange angeordnet ist, und wobei der zweite Gelenkabschnitt mit dem Befestigungselement oder dem Stellring oder der Wandung gekoppelt ist.

In einer weiteren Ausführungsform sind das Koppelelement und das weitere Koppelelement identisch ausgebildet. Auf diese Weise kann eine kostengünstige Mischvorrichtung bereitgestellt werden.

Alternativ ist denkbar, dass in einer weiteren Ausführungsform das Koppelelement eine Längserstreckung aufweist, die abweichend zu einer Längserstreckung des weiteren Koppelelements ist.

Besonders vorteilhaft ist, wenn die Wandung einen ersten Wandabschnitt und einen radial außen liegend zum ersten Wandabschnitt angeordneten zweiten Wandabschnitt umfasst, wobei das Koppelelement mit dem ersten Wandabschnitt verbunden ist und wobei der zweite Wandabschnitt mit dem ersten Wandabschnitt gekoppelt ist.

Auf einfache Weise kann der erste Wandabschnitt geschwenkt werden, wenn an der Tragestruktur ein weiteres Gelenk angeordnet ist, das den ersten Wandabschnitt schwenkbar um eine Schwenkachse mit der Tragestruktur verbindet, wobei die Schwenkachse senkrecht zu einer Drehachse des Stellrings angeordnet ist.

Besonders bauraumgünstig ist, wenn an dem ersten Wandabschnitt außenseitig ein Gelenksteg angeordnet ist, wobei an dem Gelenksteg radial außenseitig beabstandet zur Schwenkachse das Koppelement mit dem Gelenksteg befestigt ist.

Die Aufgabe wird aber auch durch ein Turbofantriebwerk mit den Merkmalen des Anspruchs 10 gelöst.

Erfindungsgemaß wurde erkannt, dass ein besonders schadstoffarmes und geräuscharmes Turbofantriebwerk bereit gestellt werden kann, wenn das Turbofantriebwerk einen Fan, eine mit dem Fan gekoppelten Fluggasturbine und eine Mischvorrichtung umfasst, wobei die Fluggasturbine einen ersten Gasstrom und der Fan einen zum ersten Gasstrom radial außenseitig strömenden zweiten Gasstrom bereitstellt. Die Mischvorrichtung ist stromabwärtsseitig an der Fluggasturbine angeordnet und ausgebildet, den ersten Gasstrom mit dem zweiten Gasstrom zumindest teilweise zu vermischen, wobei die Mischvorrichtung wie oben erläutert ausgebildet ist.

Nachfolgend soll die Erfindung anhand von Figuren näher erläutert werden. Dabei werden gleiche Bauteile mit gleichen Bezugszeichen bezeichnet. Dabei zeigen:
Fig. 1 eine schematische Schnittansicht durch ein Turbofantriebwerk mit einer Mischvorrichtung;
Fig. 2 eine Seitenansicht der in Fig. 1 gezeigten Mischvorrichtung;
Fig. 3 eine Rückansicht der in Fig. 2 gezeigten Mischvorrichtung;
Fig. 4 einen Längsschnitt durch die in Fig. 2 gezeigte Mischvorrichtung entlang einer in Fig. 2 gezeigten Schnittebene A-A;
Fig. 5 eine Explosionszeichnung der in Fig. 4 gezeigten Mischvorrichtung mit einer Betätigungseinrichtung; und
Fig. 6 eine Explosionszeichnung der in Fig. 5 gezeigten Betätigungseinrichtung.

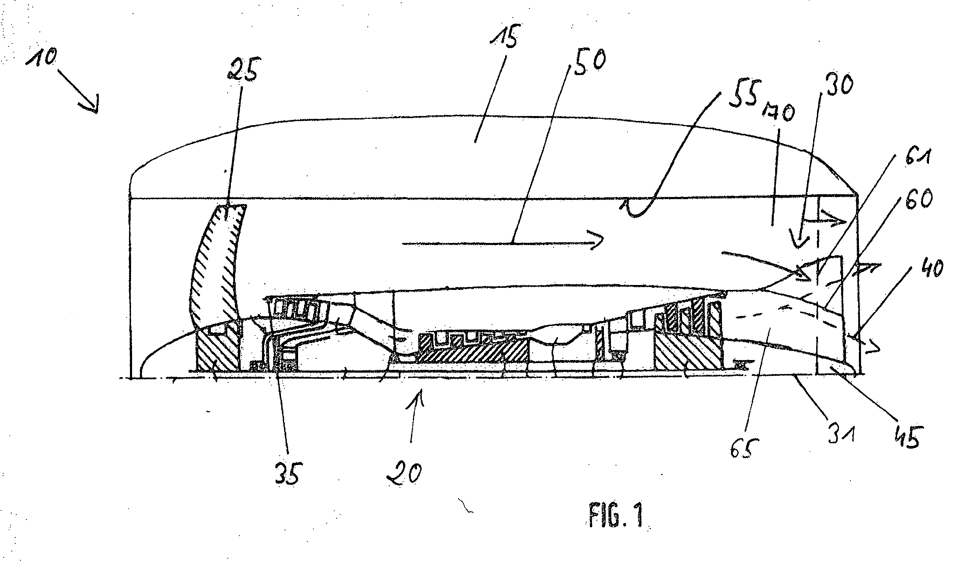

Fig. 1 zeigt eine schematische Schnittansicht durch ein Turbofantriebwerk 10 mit einer Mischvorrichtung 30.

Das Turbofantriebwerk 10 ist in einer Triebwerksgondel 15 angeordnet und umfasst eine Fluggasturbine 20, einen Fan 25, der stromaufwärtsseitig zu der Fluggasturbine 20 angeordnet ist sowie die stromabwärtsseitig zur Fluggasturbine 20 angeordnete Mischvorrichtung 30. Ferner sind Elemente der Fluggasturbine 20 sowie des Fans 25 drehbar um eine Drehachse 31 des Turbofantriebswerks 20 angeordnet. Im Betrieb des Turbofantriebwerks 10 wird ein erzeugter Luftstrom an einem Strömungsteiler 35 aufgeteilt. Ein radial innen strömender Teil des Luftstroms, auch Kern- oder Primärstrom genannt, wird durch die Fluggasturbine 20 geleitet und verlässt die Fluggasturbine 20 stromabwärtsseitig als Heißluftstrom 40 (punktierte Linie) zwischen einem Abgaskonus 45 und der Mischvorrichtung 30. Ein durch den Strömungsteiler 35 radial außen zur Fluggasturbine 20 verlaufender Kaltluftstrom 50 (durchgezogene Linie), auch Mantel- Bypass- oder Sekundärstrom genannt, wird zwischen einer Innenwand 55 der Triebwerksgondel 15 und der Mischvorrichtung 30 geführt. Die Mischvorrichtung 30 ist ausgebildet in einer Mischebene 61, den Kaltluftstrom 50 mit dem Heißluftstrom 40 zu vermischen, um den Treibstoffverbrauch der Fluggasturbine 20 bzw. die Lärmemissionen des Turbofantriebwerks 10 zu reduzieren.

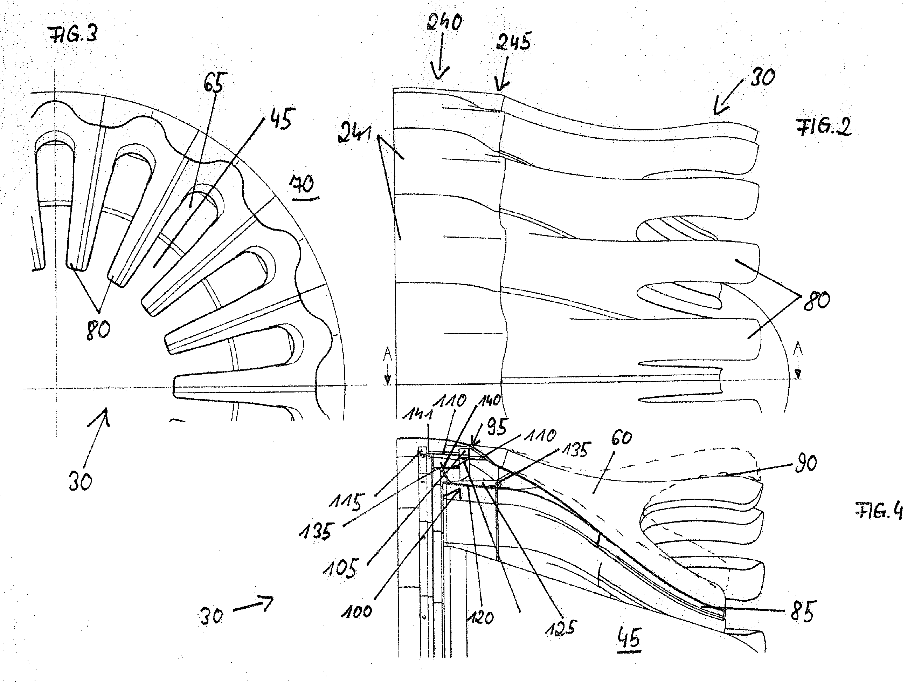

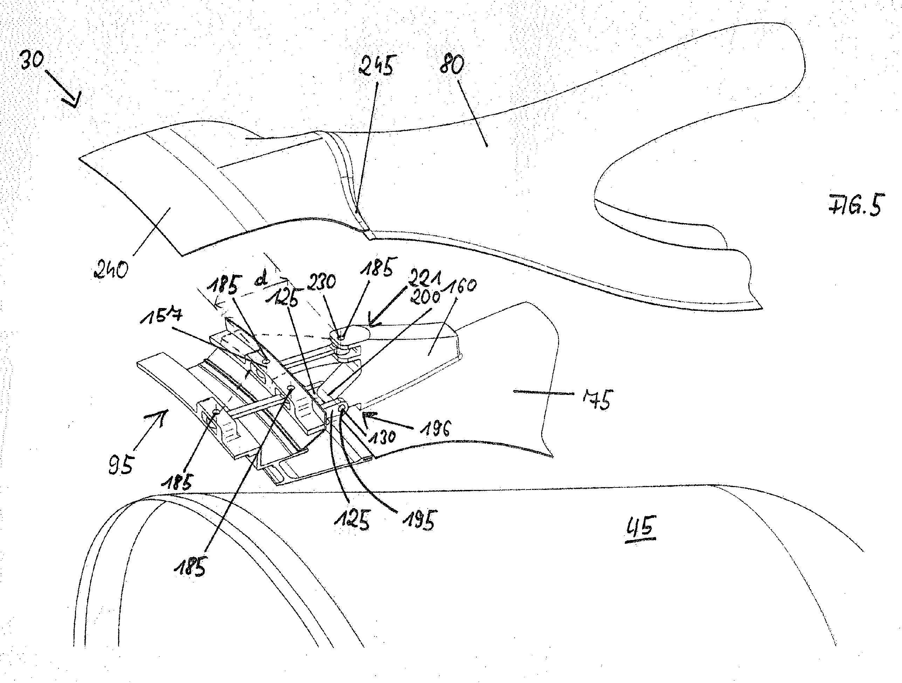

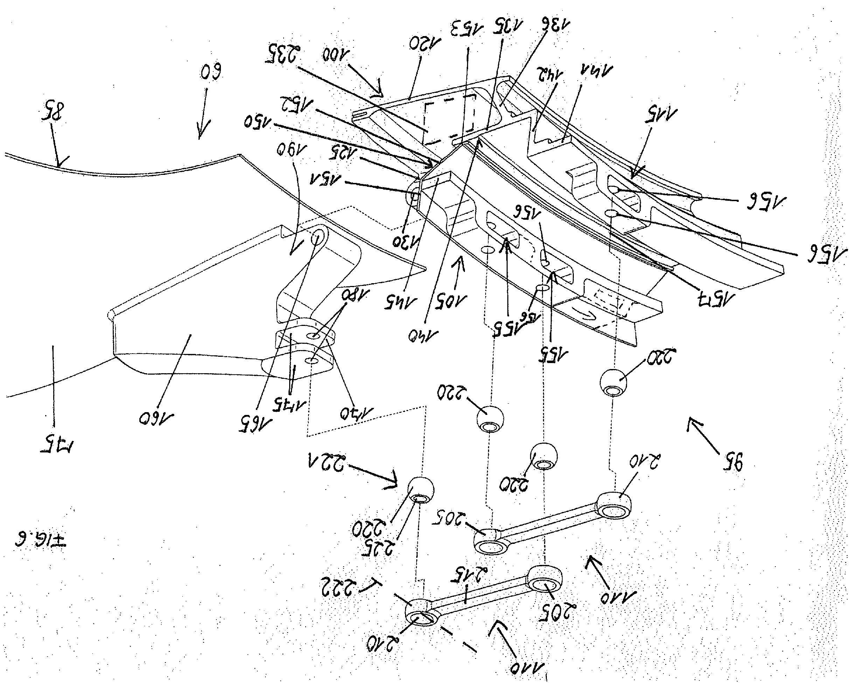

Fig. 2 zeigt eine Seitenansicht der in Fig. 1 gezeigten Mischvorrichtung 30 und Fig. 3 eine Rückansicht der in Fig. 2 gezeigten Mischvorrichtung 30. In Fig.4 ist ein Längsschnitt durch die in Fig. 2 gezeigte Mischvorrichtung 30 entlang einer in Fig. 2 gezeigten Schnittebene A-A dargestellt und Fig. 5 zeigt eine Explosionszeichnung der in Fig. 4 gezeigten Mischvorrichtung 30 mit einer Betätigungseinrichtung 95. Fig. 6 zeigt eine Explosionszeichnung der in Fig. 5 gezeigten Betätigungseinrichtung 95. Im Folgenden sollen die Figuren 1 bis 6 zur erleichterten Verständlichkeit gemeinsam erläutert werden.

Die Mischvorrichtung 30 umfasst eine Wandung 60, die ausgebildet ist, den radial innen strömenden Heißluftstrom 40 in einem ersten Kanal 65 zwischen dem Abgaskonus 45 und der Wandung 60 zu begrenzen. Ferner begrenzt die Wandung 60 radial außenseitig einen zweiten Kanal 70, der zwischen der Innenwand 55 und der Wandung 60 verläuft. In dem zweiten Kanal 70 wird der Kaltluftstrom 50 kommend vom Fan 25 geführt. Die Mischvorrichtung 30 ist dabei ausgebildet, den Heißluftstrom 40 mit dem Kaltluftstrom 50 miteinander zu vermischen, um den Treibstoffverbrauch des Turbofantriebwerks 10 zu reduzieren. Dazu ist die Mischvorrichtung 30 als Blütenmischer ausgebildet, wobei die Wandung 60 mehrere in Umfangsrichtung aneinander angeordnete Wandabschnitte 75, 80 umfasst. Radial außen liegend ist an einem ersten Wandabschnitte 75 jeweils ein zweiter Wandabschnitt 80 vorgesehen, der mit dem ersten Wandabschnitt 75 gekoppelt ist. Dabei umfasst der zweite Wandabschnitt 80 eine radial innen verlaufende erste Führungskontur 85 und eine radial außen zur ersten Führungskontur 85 verlaufende zweite Führungskontur 90. Mit der ersten Führungskontur 85 wird eine radial nach innen sowohl des Kaltluftstroms 50 und des Heißluftstroms 40 erreicht. Mit der zweiten Führungskontur 90 wird eine Strömung des Kaltluftstroms 50 radial nach außen und des Heißluftstroms 40 erreicht. Auf diese Weise werden in Umfangsrichtung abwechselnd die Heiß- und Kaltluftströme 40, 50 geführt und durch einen Querströmungsanteil im Kalt- bzw. Heißluftstrom 40, 50 in Umfangsrichtung zuverlässig vermischt.

Um eine optimale Schallreduzierung bei unterschiedlichen Betriebspunkten der Fluggasturbine 20 zu ermöglichen, ist eine Betätigungsvorrichtung 95 vorgesehen. Die Betätigungsvorrichtung 95 ist mit der Wandung 60 gekoppelt. Die Betätigungsvorrichtung 95 schwenkt je nach Betriebspunkt die Wandung 60 zwischen einer ersten Position (mittels durchgezogener Linie in Fig. 4 dargestellt), die beispielsweise radial innen angeordnet ist, und einer zweiten Position (in Fig. 4 mittels gestrichelter Linie dargestellt), die beispielsweise radial außen angeordnet ist. Dies bewirkt, dass in der ersten Position der Kaltluftstrom 50 stärker nach innen geführt wird als in der zweiten Position der Wandung 60, bei der der Kaltluftstrom 50 radial weiter nach außen strömen kann als in der ersten Position der Wandung 60. Die beiden Positionen können abhängig von dem jeweiligen Last- bzw. Betriebszustand der Fluggasturbine 20 gewählt werden. Selbstverständlich ist auch denkbar, je nach Betriebspunkt zwischen den zwei Positionen liegende Positionen der Wandung durch die Betätigungsvorrichtung 95 anzufahren.

Die Betätigungsvorrichtung 95 ist radial außenseitig an einer Tragestruktur 100 angeordnet. Die Tragestruktur 100 ist stromabwärtsseitig an der Fluggasturbine 20 angeordnet und mit einer drehfesten nichtdargestellten Struktur der Fluggasturbine 20 verbunden. Die Betätigungsvorrichtung 95 umfasst einen Stellring 105 und mehrere in Umfangsrichtung verteilte Koppelelemente 110. Die Koppelelemente 110 sind steif ausgebildet. An der Tragestruktur 100 sind ferner in Umfangsrichtung in gleichmäßigem Abstand verteilte Befestigungselemente 115 radial außenseitig an der Tragestruktur 100 angeordnet. Die Tragestruktur 100 umfasst eine gestufte radial nach außen hin stromaufwärtsseitig verlaufende Ausgestaltung. Dabei ist (vgl. Fig. 6) in einem ersten radial innen liegenden Abschnitt 120 ein Steg 125 vorgesehen, an dessen zur Wandung 60 zugewandten Ende eine erste Gelenköffnung 130 angeordnet ist. Radial außenseitig zum ersten Abschnitt 120 ist ein zweiter Abschnitt 135 angeordnet. Der erste Abschnitt 120 und der zweite Abschnitt 135 sind mittels eines ersten Verbindungsstegs 136 verbunden. Der erste Verbindungssteg 136 ist dabei schräg zu der Drehachse 31 ausgerichtet und verhindert ein Eindringen vom Heißluftstrom 40 zwischen den ersten und den zweiten Abschnitt 120, 135 der Trägerstruktur 100. Der zweite Abschnitt 135 ist im Wesentlichen parallel zur Drehachse 31 der Fluggasturbine 20 angeordnet. Radial außenseitig umfasst der zweite Abschnitt 135 eine Führungsfläche 140. Die Führungsfläche 140 ist dabei radial nach außen zu dem übrigen zweiten Abschnitt 135 abgesetzt. Selbstverständlich ist auch denkbar, dass die Führungsfläche 140 durchgängig am zweiten Abschnitt 135 verlaufend oder radial nach innen abgesetzt ausgebildet ist. In einem weiteren radial außenseitig zum zweiten Abschnitt 135 angeordneten dritten Abschnitt 141 sind radial außenseitig am dritten Abschnitt 141 die Befestigungselemente 115 angeordnet. Der dritte Abschnitt 141 und der zweite Abschnitt 135 sind über einen zweiten umfangsseitig umlaufenden Verbindungssteg 142 verbunden. Auch der zweite Verbindungssteg 142 ist senkrecht zur Drehachse 31 angeordnet und verhindert ein Eindringen vom Heißluftstrom 40 zwischen den zweiten und den dritten Abschnitt 135, 141 und verhindert somit ein Überhitzen der stromabwärtsseitig zur Trägerstruktur 100 angeordneten Komponenten der Betätigungseinrichtung 95.

Der Stellring 105 umfasst ein Ringelement 145 und ein Führungselement 150, das radial innenseitig und auf der zur Wandung 60 zugewandten Seite des Stellrings 105 angeordnet ist. Das Führungselement 150 umfasst einen senkrecht zur Drehachse 31 angeordneten ersten Führungselementabschnitt 151 und einen konusartig ausgebildeten zweiten radial innen liegend zum ersten Führungselementabschnitt 151 angeordneten zweiten Führungselementabschnitt 152. Das Führungselement 150 ist über den ersten Führungselementabschnitt 151 mit dem Ringelement 145 verbunden. An dem zweiten Führungselementabschnitt 152 ist radial innen zum Stellring 145 auf der zur Führungsfläche 140 zugewandten Seite ein V-förmig ausgebildeter Lagerabschnitt 153 vorgesehen, der auf der Führungsfläche aufliegt und den Stellring 105 radial in seiner Position festlegt bzw. lagert. Selbstverständlich ist auch denkbar, das Ringelement 145 andersartig zu lagern.

Das Ringelement 145 umfasst mehrere erste rechteckförmig ausgebildete Aufnahmen 155, die umfangsseitig jeweils paarweise nebeneinander in gleichmäßigem Abstand angeordnet sind. In die ersten Aufnahmen 155 greift jeweils ein stromaufwärtsseitig und ein stromabwärtsseitig zum Ringelement 145 angeordnetes Koppelelement 110 ein. Das stromaufwärtsseitige Koppelelement 110 ist über die erste Aufnahme 155 mit dem Ringelement 145 an einem ersten Längsende des Koppelelements 110 und an einem zweiten Längsende des Koppelelements 110 mit dem Befestigungselement 115 verbunden. Die ersten Aufnahmen 155 umfassen jeweils zwei gegenüberliegend angeordnete erste Gelenkbolzenaufnahmen 156, die auf einer Achse 157 senkrecht zur Drehachse 31 angeordnet sind. Selbstverständlich ist auch denkbar, dass die ersten Aufnahmen 155 unregelmäßig, einzeln und/oder gruppiert entlang des Umfangs des Ringelements 145 verteilt sind. Auch ist denkbar, dass die ersten Aufnahmen 155 andersartig beispielsweise hinsichtlich ihres Querschnitts ausgebildet sind. Das Befestigungselement 115 der Tragestruktur 100 ist dabei identisch zu der ersten Aufnahme 155 ausgebildet und entlang der Tragestruktur 100 korrespondierend zu den ersten Aufnahmen 155 umfangsseitig verteilt.

Die Wandung 60 umfasst an dem ersten Wandabschnitt 75 einen in radialer Richtung und im Wesentlichen parallel zur Drehachse 31 sich erstreckenden Gelenksteg 160, der radial außenseitig an dem ersten Wandabschnitt 75 angeordnet ist. Der Gelenksteg 160 umfast eine Gelenkbohrung 165, die stromaufwärtsseitig, radial außen liegend zu der ersten Führungskontur 85 und an diese angrenzend an dem Gelenksteg 160 angeordnet ist. Radial außen liegend zu der Gelenkbohrung 165 ist eine Koppelaufnahme 170 angeordnet, die zwei parallel sich erstreckend ausgebildete Laschenelemente 175 umfasst. In den Laschenelementen 175 ist jeweils eine zweite Gelenkbolzenaufnahme 180 vorgesehen, um einen radial in Richtung der Drehachse 31 verlaufenden ersten Gelenkbolzen 185 aufzunehmen (vgl. Fig. 5).

Die Stege 125 sind parallel an dem ersten Abschnitt 120 der Tragestruktur 110 angeordnet und umgreifen seitlich den Gelenksteg 160 an der Gelenkbohrung 165 und liegen an einer ihnen jeweils zugewandten Seitenfläche 190 des Gelenkstegs 160 im Bereich der Gelenkbohrung 165 an. Durch die erste Gelenköffnung 130 und die Gelenkbohrung 165 ist ferner ein zweiter Gelenkbolzen 195 geführt, um ein Gelenk 196 zum Schwenken des ersten Wandabschnitts 75 um eine Schwenkachse 200, die senkrecht zur Drehachse 31 der Fluggasturbine 20 ausgerichtet ist, bereitzustellen.

Das Koppelelement 110 umfasst an einem ersten Längsende eine zweite Aufnahme 205 und an einem zweiten Längsende eine dritte Aufnahme 210. Die zweite bzw. dritte Aufnahme 205, 210 sind dabei innenseitig kugelschalenartig ausgebildet. Zwischen den beiden Aufnahmen 205, 210 ist eine Koppelstange 215 angeordnet, die geradlinig ausgebildet ist und die zweite Aufnahme 205 mit der dritten Aufnahme 210 verbindet. Die beiden Aufnahmen 205, 210 umgreifen umfangsseitig einen Gelenkkopf 220, der außenseitig in seiner Ausgestaltung an die kugelschalenartige Ausgestaltung der zweiten Aufnahme 205 bzw. dritten Aufnahme 210 angepasst ist. Der Gelenkkopf 220 wird umfangsseitig durch die Aufnahmen 205, 210 umgriffen, wobei der Gelenkkopf 220 mit der ihm zugeordneten zweiten bzw. dritten Aufnahme 205, 210 in Berührkontakt steht um durch die jeweilige Aufnahme 205, 210 in seiner Position fixiert zu werden. Dabei bilden der Gelenkkopf 220 und die Aufnahmen 205, 210 jeweils ein Gelenk 221 aus, wobei die zweiten bzw. dritten Aufnahmen 205, 210 jeweils einen ersten Gelenkabschnitt darstellen, der gegenüber dem Gelenkkopf 220 als zweiter Gelenkabschnitt in wenigstens zwei Ebenen bzw. um die Achse 157 und eine weitere Schwenkachse 222 geneigt werden kann, die senkrecht zur Achse 157 ausgerichtet ist. Um ein ungewolltes Herausrutschen des Gelenkkopfs 220 aus der zweiten bzw. dritten Aufnahme 205, 210 zu vermeiden, kann beispielsweise der Gelenkkopf 220 in die zweite bzw. dritte Aufnahme 205, 210 eingepresst sein. Dabei ist in der Ausführungsform das Gelenk 221 als Kugelgelenk ausgebildet, wobei selbstverständlich auch andere Gelenkausbildungen denkbar wären, sofern ein Schwenken der Koppelstange 215 gegenüber dem Ringelement 145 in zwei Ebenen möglich ist.

Der Gelenkkopf 220 umfasst eine dritte Gelenkbolzenaufnahme 225. Zur Verbindung des stromabwärtsseitig zum Ringelement 145 angeordneten Koppelelements 110 ist durch die dritte Gelenkbolzenaufnahme 225 in montiertem Zustand der Mischvorrichtung 30 der erste Gelenkbolzen 185 geführt, der ferner durch die erste Gelenkbolzenaufnahme 156 der ersten Aufnahme 155 des Ringelements 145 geführt ist und somit das Koppelelement 110 an der zweiten Aufnahme 205 mit dem Ringelement 145 verbindet.

Durch die dritte Aufnahme 210 bzw. deren zweite Gelenkbolzenaufnahme 180 des Koppelelements 110 und die Koppelaufnahme 170 bzw. deren zweite Gelenkbolzenaufnahmen 180 ist ferner ein weiterer erster Gelenkbolzen 185 geführt, der das Koppelelement 110 mit dem Gelenksteg 160 verbindet. Auf diese Weise kann das Ringelement 145 einfach mit dem Gelenksteg 160 gekoppelt werden.

Das in Fig. 5 und 6 linksseitig bzw. stromaufwärtsseitig, also der zur Wandung 60 abgewandten Seite des Ringelements 145, angeordnete Koppelelement 110 wird mittels der ersten Gelenkbolzen 185 mit der ersten Aufnahme 155 des Ringelements 145 bzw. mit dem Befestigungselement 115 verbunden. Ferner ist durch die Befestigung des Stellrings 105 mit den Koppelelementen 110 sowohl am Befestigungselement 115 als auch an der Koppelaufnahme 170 dessen axiale Position zur Tragestruktur 100 festgelegt.

In der Ausführungsform sind sowohl die zweite als auch die dritte Aufnahme 205, 210 identisch zueinander ausgebildet. Selbstverständlich ist auch denkbar, dass die zweite bzw. dritte Aufnahme 205, 210 bzw. ein zu der zweiten bzw. dritten Aufnahme 205, 210 zugeordneter Gelenkkopf 220 abweichend zueinander ausgebildet sind. Ferner sind in der Ausführungsform die beiden Koppelstangen 215 in ihrer Längserstreckung identisch. Selbstverständlich ist auch eine Ausgestaltung dahingehend denkbar, dass das in den Figuren 5 und 6 linksseitig angeordnete Koppelelement 110 eine Koppelstange 215 aufweist, dessen Längserstreckung abweichend zu dem in den Figuren 5 und 6 rechtsseitig angeordneten Koppelelement 110 bzw. dessen Koppelstange 215 ist.

Der Stellring 105 ist mit einem in Fig. 6 schematisch dargestellten Aktuator 235 gekoppelt. Der Aktuator 235 kann dabei seinerseits mit einer nicht dargestellten Steuereinrichtung verbunden sein, die ausgebildet ist, den Aktuator 235 anzusteuern und/oder mit Energie zu versorgen. Der Aktuator 235 ist ausgebildet, den Stellring 105 zwischen einer ersten Drehposition (in Fig. 6 mittels durchgezogener Linien dargestellt) und einer zweiten Drehposition (in Fig. 6 mittels gestrichelter Linien dargestellt) um die Drehachse 31 der Fluggasturbine 20 zu verdrehen. Der Aktuator 235 kann beispielsweise als mechanischer elektrischer, elektromechanischer, pneumatischer und/oder hydraulischer Aktuator 235 ausgebildet sein. Selbstverständlich sind auch andere Betriebsarten oder Kombinationen genannter Ausbildungsformen des Aktuators 235 denkbar. Auch ist denkbar den Aktuator 235 an einer Position als radial außenseitig zum ersten Abschnitt 120 der Trägerstruktur 110 anzuordnen.

Wird der Stellring 105 aus einer ersten Drehposition beispielsweise gegen den Uhrzeigersinn in Fig. 6 nach links verdreht, so werden die Koppelelemente 110 durch das Ringelement 145 mitgenommen. In Fig. 5 ist dabei schematisch eine Auslenkung der Koppelelemente 110 bei der Verdrehung des Stellrings 105 in der zweiten Drehposition mittels gestrichelter Linien aufgezeigt. Durch die drehfeste Anordnung der Befestigungselemente 115 und der Gelenkstege 160 verkürzt sich bei der Verdrehung des Stellrings 105 aus der ersten Drehposition in die zweite Drehposition ein axialer Abstand d zwischen dem Gelenksteg 160 und dem Stellring 105, so dass der erste Wandabschnitt 75 angehoben bzw. von seiner ersten Position in seine zweite Position, die mit der zweiten Drehposition korreliert, mitbewegt wird. Beim Verdrehen schwenkt der erste Wandabschnitt 75 radial nach außen um die Gelenkachse 200. Durch die Koppelung des ersten Wandabschnitts 75 mit dem zweiten Wandabschnitt 80 wird dieser ebenso radial nach außen um die Gelenkachse 200 geschwenkt. Dadurch wird der erste Kanal 65 zwischen der Wandung 60 und dem Abgaskonus 45 aufgeweitet. Wird der Stellring 105 von der zweiten Drehposition zurück in Richtung der ersten Drehposition bzw. der Ursprungsposition zurückverdreht, so wird der Abstand d zwischen dem Stellring 105 und der Koppelaufnahme 170 vergrößert, so dass der erste Wandabschnitt 75 um die Schwenkachse 200 zurück in Richtung der ersten Position geschwenkt wird. Es wird darauf hingewiesen, dass eine Verdrehung im Uhrzeigersinn bzw. gegen den Uhrzeigersinn zum gleichen Schwenkergebnis führt. Selbstverständlich ist auch denkbar, dass zwischen der ersten Drehposition und der zweiten Drehposition bzw. der ersten Position des ersten Wandabschnitts 75 und der zweiten Position der Wandung 60 auch dazwischen liegende Dreh- bzw. Positionen angefahren werden können, so dass eine stufenlose Verstellung der Wandung 60 und somit eine stufenlose Einstellung eines Querschnitts des ersten Kanals 65 bzw. des zweiten Kanals 70 in einer Mischebene 61 festgelegt werden kann. Auf diese Weise kann das Turbofantriebwerk 10 bzw. die Mischvorrichtung 30 auf unterschiedliche Betriebspunkte des Turbofantriebwerks 10 abgestimmt werden, so dass das Turbofantriebwerk 10 insgesamt eine geringere Lärmemission bzw. geringere Schadstoffemissionen aufweist.

Um das Eindringen des Kaltluftstroms 50 in die Mischvorrichtung 30 bzw. ein Vermischen des Heißluftstroms 40 mit dem Kaltluftstrom 50 an der Betätigungseinrichtung 95 zu vermeiden, ist die Tragestruktur 100 und deren einzelne Abschnitte 120, 135, 141 einstückig miteinander verbunden. Ferner sind die einzelnen Abschnitte 120, 135, 141 derartig zueinander gestuft angeordnet, dass die Betätigungsvorrichtung 95 vollständig stromabwärtsseitig hinter der Tragestruktur 100 angeordnet ist und so im Totwassergebiet der Tragestruktur 100 liegt. Zusätzlich ist ferner denkbar, dass an der Tragestruktur 100 ein nicht dargestelltes Dichtelement vorgesehen ist, um die Tragestruktur 100 radial nach außen hin zu einer Verkleidung 240 hin abzudichten. Die Verkleidung 240 ist in einzelnen Verkleidungssegmenten 241 ausgebildet und weist einen Überlappungsabschnitt 245 auf, mit dem sich die Verkleidung 240 mit dem zweiten Wandabschnitt 80 überlappt, so dass ein Eindringen des Kaltluftstroms 50 in die Mischvorrichtung 30 vermieden wird. Dabei ist der Überlappungsabschnitt 245 derart ausgebildet, dass in jeder der angefahrenen Position des zweiten Wandabschnitts 80 die Verkleidung 240 radial außenseitig an dem zweiten Wandabschnitt 80 anliegt. Auf diese Weise wird ferner zuverlässig eine Vermischung von Heißluftstrom 40 und Kaltluftstrom 50 innerhalb der Mischvorrichtung 30, insbesondere innerhalb der Betätigungsvorrichtung 95, vermieden.

### Bezugszeichenliste

- 10: Turbofantriebwerk
- 15: Triebwerksgondel
- 20: Fluggasturbine
- 25: Fan
- 30: Mischvorrichtung
- 31: Drehachse
- 35: Strömungsteiler
- 40: Heißluftstrom
- 45: Abgaskonus
- 50: Kaltluftstrom
- 55: Innenwand
- 60: Wandung
- 61: Mischebene
- 65: erster Kanal
- 70: zweiter Kanal
- 75: erster Wandabschnitt
- 80: zweiter Wandabschnitt
- 85: erste Führungskontur
- 90: zweite Führungskontur
- 95: Betätigungsvorrichtung
- 100: Tragestruktur
- 105: Stellring
- 110: Koppelelement
- 115: Befestigungselement
- 120: erster radial innen liegender Abschnitt der Tragestruktur
- 125: Steg
- 130: erste Gelenköffnung
- 135: zweiter Abschnitt der Tragestruktur
- 136: erster Verbindungssteg
- 140: Führungsfläche
- 141: dritter Abschnitt der Tragestruktur
- 142: zweiter Verbindungssteg
- 145: Ringelement
- 150: Führungselement
- 151: Führungselementabschnitt
- 152: Führungselementabschnitt
- 153: Lagerabschnitt
- 155: Aufnahme
- 156: erste Gelenkbolzenaufnahme
- 157: Achse
- 160: Gelenksteg
- 165: Gelenkbohrung
- 170: Koppelaufnahme
- 175: Laschenelement
- 180: zweite Gelenkbolzenaufnahme
- 185: Gelenkbolzen
- 190: Seitenfläche
- 195: zweiter Gelenkbolzen
- 196: Gelenk
- 200: Schwenkachse
- 205: zweite Aufnahme
- 210: dritte Aufnahme
- 215: Koppelstange
- 220: Gelenkkopf
- 221: Gelenk
- 225: dritte Gelenkbolzenaufnahme
- 235: Aktuator
- 240: Verkleidung
- 241: Verkleidungssegment
- 245: Überlappungsabschnitt

## Patentansprüche

1. Mischvorrichtung (30) zum Mischen eines ersten Gasstroms (40) mit einem zweiten Gasstrom (50) in einem Turbofantriebwerk (20),
- mit einer Betätigungsvorrichtung (95) und einer Wandung (60), die einen radial innen liegenden Kanal (65) für den ersten Gasstrom (40) und einen radial außen liegenden Kanal (70) für den zweiten Gasstrom (50) begrenzt,
- wobei die Betätigungseinrichtung (95) ein Koppelelement (110) umfasst, das mit der Wandung (60) gekoppelt ist,
- wobei die Betätigungseinrichtung (95) ausgebildet ist, mittels des Koppelelements (110) die Wandung (60) zwischen einer ersten Position in eine radial außen zur ersten Position angeordneten zweiten Position zu schwenken,
- wobei die Betätigungsvorrichtung (95) einen zwischen einer ersten Drehposition und einer zweiten Drehposition in Umfangsrichtung verdrehbaren Stellring (105) umfasst, der mit dem Koppelelement (110) verbunden ist,
- wobei das Koppelelement (110) steif ausgebildet und mit dem Stellring (105) derart gekoppelt ist, dass durch eine Verdrehung des Stellrings (105) zwischen der ersten Drehposition und der zweite Drehposition, die Wandung (60) durch das Koppelelement (110) zwischen der ersten Position und der zweite Position korrespondierend zur Verdrehung des Stellrings (105) geschwenkt wird.
**gekennzeichnet durch** eine Tragestruktur (100), die in axialer Richtung angrenzend an die Wandung (60) angeordnet ist, wobei die Tragestruktur (100) ein Befestigungselement (115) umfasst, wobei axial der Stellring (105) zwischen dem Befestigungselement (115) und der Wandung (60) angeordnet ist und mit einem weiteren Koppelelement (110) mit dem Befestigungselement (115) verbunden ist.

2. Mischvorrichtung (30) nach Anspruch 1, **dadurch gekennzeichnet, dass** das Koppelelement (110) und das weitere Koppelelement (110) in Umfangsrichtung nebeneinander angrenzend an dem Stellring (105) angeordnet sind.

3. Mischvorrichtung (30) nach einem der vorhergehenden Ansprüche, **dadurch gekennzeichnet, dass** das Koppelelement (110) eine Koppelstange (215) umfasst und wenigstens ein Gelenk (221) mit einem ersten Gelenkabschnitt (205, 210) und einem mit dem ersten Gelenkabschnitt (205, 210) verbundenen zweiten Gelenkabschnitt (220) vorgesehen ist, wobei der erste Gelenkabschnitt (205, 210) gegenüber dem zweiten Gelenkabschnitt (220) um zumindest eine Achse (157, 222), insbesondere zwei Achsen (157, 222) schwenkbar ist, wobei der erste Gelenkabschnitt (205, 210) an zumindest einem Längsende der Koppelstange (215) angeordnet ist, und wobei der zweite Gelenkabschnitt (220) mit dem Befestigungselement (115) oder dem Stellring (105) oder der Wandung (60) gekoppelt ist.

4. Mischvorrichtung (30) nach Anspruch 2 oder 3, **dadurch gekennzeichnet, dass** das Koppelelement (110) und das weitere Koppelelement (110) identisch ausgebildet sind.

5. Mischvorrichtung (30) nach einem der Ansprüche 2 oder 3, **dadurch gekennzeichnet, dass** das Koppelelement (110) eine Längserstreckung aufweist, die abweichend zu einer Längserstreckung des weiteren Koppelelements (110) ist.

6. Mischvorrichtung (30) nach einem der vorhergehenden Anspruch, **dadurch gekennzeichnet, dass** die Wandung (60) einen ersten Wandabschnitt (75) und einen radial außen liegend zum ersten Wandabschnitt (75) angeordneten zweiten Wandabschnitt (80) umfasst, wobei das Koppelelement (110) mit dem ersten Wandabschnitt (75) verbunden ist, und wobei der zweite Wandabschnitt (80) mit dem ersten Wandabschnitt (75) gekoppelt ist.

7. Mischvorrichtung (30) nach Anspruch 6, **dadurch gekennzeichnet, dass** an der Tragestruktur (100) ein weiteres Gelenk (196) angeordnet ist, das den ersten Wandabschnitt (75) schwenkbar um eine Schwenkachse (200) mit der Tragestruktur (100) verbindet, wobei die Schwenkachse (200) des Gelenks (196) senkrecht zu einer Drehachse (31) des Stellrings (105) angeordnet ist.

8. Mischvorrichtung (30) nach Anspruch 7, **dadurch gekennzeichnet, dass** an dem ersten Wandabschnitt (75) außenseitig ein Gelenksteg (160) angeordnet ist, wobei an dem Gelenksteg (160) radial außenseitig beabstandet zur Schwenkachse (200) das Koppelement (110) mit dem Gelenksteg (160) verbunden ist.

9. Turbofantriebwerk (20) mit einem Fan (25), einer mit dem Fan (25) gekoppelten Fluggasturbine (20) und einer Mischvorrichtung (30), wobei die Fluggasturbine (20) ausgebildet ist, einen ersten Gasstrom (40) und der Fan (25) einen zum ersten Gasstrom (40) radial außenseitig strömenden zweiten Gasstrom (50) bereitzustellen, wobei die Mischvorrichtung (30) stromabwärtsseitig an der Fluggasturbine (20) angeordnet und ausgebildet ist, den ersten Gasstrom (40) mit dem zweiten Gasstrom (50) zumindest teilweise zu vermischen, **dadurch gekennzeichnet, dass** die Mischvorrichtung (30) nach einem der vorhergehenden Ansprüche ausgebildet ist.

## Claims

1. A mixing device (30) for mixing a first gas flow (40) with a second gas flow (50) in a turbofan engine (20),
- having an actuating device (95) and a wall (60) which delimits a radially internal channel (65) for the first gas flow (40) and a radially external channel (70) for the second gas flow (50),
- wherein the actuating device (95) comprises a coupling element (110) which is coupled to the wall (60),
- wherein the actuating device (95) is formed to swivel the wall (60), by means of the coupling element (110), between a first position and a second position arranged radially externally relative to the first position,
- wherein the actuating device (95) comprises an adjusting ring (105) that is connected to the coupling element (110) and can be rotated between a first rotary position and a second rotary position in the circumferential direction,
- wherein the coupling element (110) is formed rigidly and is coupled to the adjusting ring (105) in such a way that as a result of a rotation of the adjusting ring (105) between the first rotary position and the second rotary position the wall (60) is swivelled, by means of the coupling element (110), between the first position and the second position in a manner corresponding to the rotation of the adjusting ring (105),
**characterised by** a supporting structure (100) that is arranged in the axial direction adjacently to the wall (60), wherein the supporting structure (100) comprises a securing element (115), wherein axially the adjusting ring (105) is arranged between the securing element (115) and the wall (60) and is connected with a further coupling element (110) to the securing element (115).

2. A mixing device (30) according to claim 1, **characterised in that** the coupling element (110) and the further coupling element (110) are arranged next to one another in the circumferential direction adjacently to the adjusting ring (105).

3. A mixing device (30) according to one of the preceding claims, **characterised in that** the coupling element (110) comprises a coupling rod (215), and at least one articulation (221) is provided having a first articulation section (205, 210) and a second articulation section (220) connected to the first articulation section (205, 210), wherein the first articulation section (205, 210) can be swivelled with respect to the second articulation section (220) about at least one axis (157, 222), in particular two axes (157, 222), wherein the first articulation section (205, 210) is arranged at at least one longitudinal end of the coupling rod (215), and wherein the second articulation section (220) is coupled to the securing element (115) or the adjusting ring (105) or the wall (60).

4. A mixing device (30) according to claim 2 or 3, **characterised in that** the coupling element (110) and the further coupling element (110) are identically formed.

5. A mixing device (30) according to one of claims 2 or 3, **characterised in that** the coupling element (110) has a longitudinal extension that differs from a longitudinal extension of the further coupling element (110).

6. A mixing device (30) according to one of the preceding claims, **characterised in that** the wall (60) comprises a first wall section (75) and a second wall section (80) that is arranged radially externally relative to the first wall section (75), wherein the coupling element (110) is connected to the first wall section (75), and wherein the second wall section (80) is coupled to the first wall section (75).

7. 11 mixing device (30) according to claim 6, **characterised in that** arranged on the supporting structure (100) there is a further articulation (196) which connects the first wall section (75), in a manner such that it can be swivelled about a swivel axes (200), to the supporting structure (100), wherein the swivel axis (200) of the articulation (196) is arranged perpendicularly to a rotational axis (31) of the adjusting ring (105).

8. A mixing device (30) according to claim 7, **characterised in that** arranged on the first wall section (75) externally there is an articulation web (160), wherein on the articulation web (160) radially externally at a distance from the swivel axis (200) the coupling element (110) is connected to the articulation web (160).

9. A turbofan engine (20) having a fan (25), an aircraft gas turbine (20), coupled to the fan (25), and a mixing device (30), wherein the aircraft gas turbine (20) is formed to provide a first gas flow (40), and the fan (25) is formed to provide a second gas flow (50) flowing radially externally relative to the first gas flow (40), wherein the mixing device (30) is arranged downstream of the aircraft gas turbine (20) and is formed to mix the first gas flow (40) with the second gas flow (50) at least in part, **characterised in that** the mixing device (30) is formed according to one of the preceding claims.

## Revendications

1. Dispositif de mélange (30) permettant de mélanger un premier flux de gaz (40) à un deuxième flux de gaz (50) dans un turboréacteur à double flux (20),
- comportant un dispositif d'actionnement (95) et une paroi (60) qui délimite un canal (65) radialement intérieur pour le premier flux de gaz (40) et un canal (70) radialement extérieur pour le deuxième flux de gaz (50),
- le dispositif d'actionnement (95) comportant un élément de couplage (110) qui est couplé à la paroi (60),
- le dispositif d'actionnement (95) étant réalisé pour faire pivoter, au moyen de l'élément de couplage (110), la paroi (60) entre une première position vers une deuxième position disposée radialement à l'extérieur par rapport à la première position,
- le dispositif d'actionnement (95) comportant une bague de réglage (105), qui est apte à tourner dans le sens circonférentiel entre une première position de rotation et une deuxième position de rotation et qui est reliée à l'élément de couplage (110),
- l'élément de couplage (110) étant rigide et étant couplé à la bague de réglage (105) de telle sorte que sous l'effet d'une rotation de la bague de réglage (105) entre la première position de rotation et la deuxième position de rotation, la paroi (60) est amenée à pivoter par l'élément de couplage (110) entre la première position et la deuxième position en correspondance avec la rotation de la bague de réglage (105),
**caractérisé par** une structure de support (100) qui est disposée dans le sens axial de manière adjacente à la paroi (60), la structure de support (100) comportant un élément de fixation (115), la bague de réglage (105) étant disposée axialement entre l'élément de fixation (115) et la paroi (60) et étant reliée à l'élément de fixation (115) par un élément de couplage (110) supplémentaire.

2. Dispositif de mélange (30) selon la revendication 1, **caractérisé en ce que** isolément de couplage (110) et l'élément de couplage (110) supplémentaire sont disposés l'un à côté de l'autre dans le sens circonférentiel en étant adjacents à la bague de réglage (105).

3. Dispositif de mélange (30) selon l'une quelconque des revendications précédentes, **caractérisé en ce que** l'élément de couplage (110) comporte une tige de couplage (215), et il est prévu au moins une articulation (221) avec une première portion d'articulation (205, 210) et avec une deuxième portion d'articulation (220) reliée à la première portion d'articulation (205, 210), ladite première portion d'articulation (205, 210) étant apte à pivoter par rapport à la deuxième portion d'articulation (220) autour d'au moins un axe (157, 222), en particulier autour de deux axes (157, 222), la première portion d'articulation (205, 210) étant disposée sur au moins une extrémité longitudinale de la tige de couplage (215), et la deuxième portion d'articulation (220) étant couplée à l'élément de fixation (115) ou à la bague de réglage (105) ou à la paroi (60).

4. Dispositif de mélange (30) selon la revendication 2 ou 3, **caractérisé en ce que** l'élément de couplage (110) et l'élément de couplage (110) supplémentaire sont réalisés de manière identique.

5. Dispositif de mélange (30) selon la revendication 2 ou 3, **caractérisé en ce que** l'élément de couplage (110) possède une extension longitudinale qui diffère de l'extension longitudinale de l'élément de couplage (110) supplémentaire.

6. Dispositif de mélange (30) selon l'une quelconque des revendications précédentes, **caractérisé en ce que** la paroi (60) comporte une première portion de paroi (75) et une deuxième portion de paroi (80) disposée radialement à l'extérieur par rapport à la première portion de paroi (75), l'élément de couplage (110) étant relié à la première portion de paroi (75), et la deuxième portion de paroi (80) étant couplée à la première portion de paroi (75).

7. Dispositif de mélange (30) selon la revendication 6, **caractérisé en ce que** sur la structure de support (100) est disposée une articulation (196) supplémentaire, par laquelle la première portion de paroi (75) est reliée à la structure de support (100) de manière à pouvoir pivoter autour d'un axe de pivotement (200), ledit axe de pivotement (200) de l'articulation (196) étant disposé perpendiculairement à un axe de rotation (31) de la bague de réglage (105).

8. Dispositif de mélange (30) selon la revendication 7, **caractérisé en ce que** sur la première portion de paroi (75) est disposée, sur le côté extérieur, une traverse d'articulation (160), l'élément de couplage (110) étant reliée à la traverse d'articulation (160) au niveau de la traverse d'articulation (160) radialement à l'extérieur à distance de l'axe de pivotement (200).

9. Turboréacteur à double flux (20) comportant une soufflante (25), une turbine à gaz (20) couplée à la soufflante (25) et un dispositif de mélange (30), la turbine à gaz (20) étant réalisée pour mettre à disposition un premier flux de gaz (40) et à la soufflante (25) un deuxième flux de gaz (50) circulant radialement à l'extérieur par rapport au premier flux de gaz (40), le dispositif de mélange (30) étant disposé du côté aval sur la turbine à gaz (20) et étant réalisé pour mélanger au moins partiellement le premier flux de gaz (40) avec le deuxième flux de gaz (50), **caractérisé en ce que** le dispositif de mélange (30) est réalisé selon l'une des revendications précédentes.
